# EUROPÄISCHE PATENTSCHRIFT

(11) **EP 3 642 444 B1**
(45) Veröffentlichungstag und Bekanntmachung des Hinweises auf die Patenterteilung: **05.05.2021**
(21) Anmeldenummer: 18739463.0
(22) Anmeldetag: 20.06.2018
(51) Int. Cl.: E21B 4/14, F16B 11/00

(54) **ERDBOHRVORRICHTUNG, VERFAHREN ZU DESSEN HERSTELLUNG UND VERWENDEN**
GROUND DRILLING DEVICE, METHOD FOR THE PRODUCTION AND USE THEREOF
ENGIN À FORER LE SOL, PROCÉDÉS DE PRODUCTION ET D'UTILISATION CORRESPONDANTS

(30) Priorität: 20.06.2017 DE 102017005767
(43) Veröffentlichungstag der Anmeldung: 29.04.2020
(73) Patentinhaber: TRACTO-TECHNIK GmbH & Co. KG, 57368 Lennestadt (DE)
(72) Erfinder: PUETTMANN, Franz-Josef, 57368 Lennestadt (DE)
(74) Vertreter: Verhasselt, Jörn
(86) Internationale Anmeldenummer: PCT/EP2018/066467
(87) Internationale Veröffentlichungsnummer: WO 2018/234401

(56) Entgegenhaltungen:
- DE-A1- 2 756 567
- DE-A1- 3 124 524
- DE-A1-102014 016 154
- DE-C1- 19 960 510
- US-B1- 6 269 889

## Beschreibung

Die Erfindung betrifft eine Erdbohrvorrichtung gemäß Anspruch 1 sowie ein Verfahren zum Herstellen einer Erdbohrvorrichtung gemäß Anspruch 6 sowie ein Verwenden eines Fügeprozesses zum Fügen eines Einsatzes gemäß Anspruch 10.

Erdbohrvorrichtungen in Form von Rammbohrvorrichtungen sind aus dem Stand der Technik bekannt und werden insbesondere für die Herstellung von horizontalen Erdbohrungen verwendet. Bei Rammbohrvorrichtungen handelt es sich um selbstgetriebene Bohrvorrichtungen. In der Regel weist eine derartige Rammbohrvorrichtung einen Schlagkolben auf, der innerhalb eines Gehäuses oszillierend (hin- und her-) bewegt wird und dabei, je nach gewünschter Bewegungsrichtung der Rammbohrvorrichtung, auf eine vordere oder hintere Schlagfläche des Gehäuses prallt. Die dabei übertragene kinetische Energie des Schlagkolbens sorgt für eine Beschleunigung der Rammbohrvorrichtung innerhalb des Erdreichs.

Eine derartige Rammbohrvorrichtung ist beispielsweise aus DE 10 2009 038 383 A1 bekannt. Das Gehäuse der aus der DE 10 2009 038 383 A1 bekannten Rammbohrvorrichtung ist aus zwei Teilen gefertigt. In einem Teil, d.h. dem hinteren Teil, oszilliert der Schlagkolben. Der andere Teil, d.h. der vordere Teil, weist den Bohrkopf auf und wird von dem Schlagkolben beaufschlagt. Die beiden Teile werden durch Reibschweißen miteinander verbunden. Üblicherweise ist der hintere Teil ein Rohr aus Baustahl, welches für die Herstellung eines Gehäuseabschnitts einer Rammbohrvorrichtung einen vorbestimmten Innendurchmesser aufweist. Der vordere Teil ist üblicherweise aus dem Vollen gefertigt und besteht aus höherwertigem Stahl, da die Kräfte des Schlagkolbens wirken. Nach dem Reibschweißen muss die Reibschweißnaht aufwendig ausgedreht werden, damit der Kolben ohne ein Hindernis nach vorne bewegt werden kann. Nach dem Ausdrehen der Reibschweißnaht erfolgt zudem das Fertigdrehen der Außenkontur des Gehäuses, damit alle Gewinde und andere Konturen auf einer Achse liegen.

DE 10 2014 016 154 A1 offenbart eine Rammbohrvorrichtung, bei der ein Ringeinsatz mittels einer Schrumpf-Verbindung in einem Gehäuse gehalten ist. Diese Verbindung hat zwar den Vorteil, dass eine Nachbearbeitung - wie das Ausdrehen einer Reibschweißnaht - nicht erforderlich ist, aber eine einmal hergestellte Verbindung ist schwer wieder zu lösen.

Der Erfindung liegt nun die Aufgabe zugrunde, eine Erdbohrvorrichtung und ein Verfahren zum Herstellen einer Erdbohrvorrichtung sowie eine Verwendung eines Fügeprozesses dahingehend zu verbessern, dass ein Aufbau ermöglicht wird, der eine einfachere Handhabung auch bei einer Wartung und/oder Reparatur bieten kann.

Diese Aufgabe wird durch den Gegenstand der nebengeordneten Ansprüche gelöst. Vorteilhafte Ausführungsformen sind in den Unteransprüchen beansprucht und ergeben sich aus der nachfolgenden Beschreibung der Erfindung.

Kern der Erfindung ist es, in dem Aufschlagabschnitt des Schlagkolbens im Gehäuse einen Einsatz vorzusehen, der den offenen Querschnitt des Gehäuses im Bereich des mit dem Schlagkolben beaufschlagbaren Endes einer Bohrkopfspitze verkleinert und mittels einer Schrumpfklebe-Verbindung gehalten wird.

Es wurde erkannt, dass ein mit dem Schlagkolben beaufschlagter Abschnitt des Gehäuses, der die Aufschlagsfläche für den Schlagkolben aufweisen kann, trotz der hohen mechanischen Beanspruchung nicht mittels einer Schrumpf-Verbindung im Gehäuse gehalten werden muss. Erfindungsgemäß kann die Außen- und Innenkontur des Rammbohrgerätes getrennt von dem eingesetzten bzw. einzusetzenden Einsatz hergestellt werden, aber das sonst für die Schrumpf-Verbindung erforderliche Übermaß kann verringert werden. Durch eine mögliche Verringerung des Übermaßes kann der sonst nötige Temperaturunterschied zum Fügen des Einsatzes in das Gehäuse ebenfalls verringert werden. Die hierdurch lediglich benötigten Temperaturen ermöglichen eine komplette Montage eines vorderen Gehäuseabschnitts schon mit allen Komponenten, was auch in Bezug auf die Kosten bei der Herstellung sehr vorteilhaft ist. Es wurde die Überlegung überwunden, dass bei den sehr hohen Belastungen beim Aufprall des Schlagkolbens auf den Einsatz eine Schrumpf-Verbindung zwingend erforderlich ist. Obwohl der Einsatz im Gehäuse derart angeordnet ist, dass er zumindest einen Teil der Energie des Schlagkolbens auf das Gehäuse überträgt, kann "lediglich" eine Schrumpfklebe-Verbindung zum Halten im Gehäuse verwendet werden. Der Einsatz kann selbst eine Aufschlagfläche für den Schlagkolben aufweisen und derartig die mechanische Energie des auf die Aufschlagfläche auftreffenden Schlagkolbens übertragen. Die mechanische Energie kann auch indirekt beispielsweise mittels Bohrkopf oder Bohrspitze, der bzw. die vom Schlagkolben beaufschlagt wird, auf den Einsatz übertragen werden. Es wurde erkannt, dass das Schrumpfkleben ein sicheres Halten schafft und die vorgenannten Vorteile bietet, obwohl bisher davon ausgegangen wurde, dass das hohe Übermaß, das für eine reine Schrumpf-Verbindung benötigt wird, erforderlich zum Halten des Einsatzes ist.

Bei der Schrumpfklebe-Verbindung wird im Gegensatz zur Schrumpf-Verbindung, die ein enormes Übermaß erfordert, ein wesentlich geringeres Übermaß benötigt. Es wurde mit dem Vorurteil gebrochen, dass eine Schrumpf-Verbindung aufgrund der um die Millionen Lastwechsel aushaltenden Verbindung ein derartiges Schrumpfen mit dem enormen Übermaß nötig ist. Durch das verringerte Übermaß ist nur ein geringerer Temperaturunterschied der beiden zu fügenden Bauelemente nötig. Das Gefüge vom Gehäuseabschnitt und des Einsatzes, welche üblicherweise aus metallischem Material bestehen, wird durch das Fügen nicht beeinflusst und insbesondere nimmt das Gefüge von Gehäuseabschnitt und Einsatz keinen Schaden. Die geringen Temperaturunterschiede, die beim Schrumpfkleben-Verbinden nötig sind, können zudem ermöglichen, dass ein komplettes vorderes Bohrkopfgehäuse oder Vordergehäuse mit einer Bohrkopfspitze, insbesondere einem Meißel, und weiteren Bauteilen, wie Druckfeder und Dichtungen, mit dem Gehäuseabschnitt in einem Vorgang verbunden werden kann. Am Gehäuse auftretende mögliche Zugspannungen können niedrig gehalten werden und mögliche am Einsatz bzw. dem kompletten vorderen Gehäuse auftretende Druckspannungen können ebenfalls niedrig gehalten werden. Es ist möglich, eine Schrumpfklebe-Verbindung derart auszugestalten, dass der einzufügende Einsatz bei im Wesentlichen Raumtemperatur verbleibt, während der Gehäuseabschnitt auf ungefähr 250°C erwärmt wird. Bei einer derartige Ausgestaltung der Schrumpfklebe-Verbindung kann der Kleber auf den im Wesentlichen bei Raumtemperatur verbleibenden, nicht erwärmten Einsatz aufgebracht werden und der Einsatz in das erwärmte vergrößerte Teil, insbesondere das Gehäuse, eingeführt werden, so dass sich der Vorteil ergeben kann, dass der Kleber sich in die kleinsten Poren eindrückt und so die Klebefläche vergrößert. Mittels des Schrumpfklebe-Verbindens kann es möglich sein, dass der einmal eingesetzte Einsatz beliebig oft demontiert und wieder montiert werden kann. Sofern das Gehäuse über die für den Kleber angegebene Temperatur erwärmt wird, so wird die klebende Wirkung des Klebers zerstört und der Kleber kann als Gleitmittel wirken, um Demontage zu vereinfachen. Beim Schrumpfklebe-Verbinden kann ein Kleber verwendet werden, der unter Luftausschluss aushärtet, so dass auch eine Montage bzw. ein Verbinden des Einsatzes im Gehäuse ermöglicht werden kann, welches ein einfaches Handling ergibt. Durch die Verwendung einer Schrumpfklebe-Verbindung kann auch der Vorteil erreicht werden, dass der Innendurchmesser eines einzuschrumpfenden und zu klebenden, dünnwandigen vorderen Bohrkopfgehäuses weniger durch den äußeren Druck des den Einsatz umgebenden Gehäuses verkleinert wird. Eine mögliche Beeinträchtigung des Einsatzes kann verringert werden. Hierdurch können einzuschrumpfende und zu klebende gesamte vordere Bohrkopfgehäuse verwendet werden, die dünnwandiger ausgeführt werden können, was beim reinen Schrumpfen nicht möglich ist. Damit kann der Einsatz und/oder ein vorderes Bohrkopfgehäuse dünnwandiger und damit mit geringerem Gewicht verwendet werden. Auch kann die Länge der Schrumpfklebe-Verbindung verkürzt werden, was zu einer geringeren Länge der Erdbohrvorrichtung führen kann. Mittels der erfindungsgemäß vorgesehenen Schrumpfklebe-Verbindung können Spannungen im Einsatz, dem vorderen Bohrkopfgehäuse und/oder dem Gehäuse im elastischen Bereich gehalten werden.

Der Begriff "Schrumpfklebe-Verbindung" umfasst die Kombination von Fügeverfahren, die ein gleichzeitiges Schrumpfen und Kleben betrifft. Es werden üblicherweise einkomponentige anaerobe Klebstoffe verwendet. Diese können bei metallischen Fügepartnern im Klebspalt abbinden. Eine Anwendung von Epoxidharzen ist möglich, welches zu höheren Festigkeiten führen kann. Eine Schrumpfklebe-Verbindung kann sich dadurch auszeichnen, dass nicht so hohe Übermaße und nicht so genaue Toleranzen notwendig sind, wie bei einer Schrumpf-Verbindung. Insbesondere kann der Kleber auf das kältere der beiden Bauelemente aufgetragen werden, was das Aufschieben des erwärmten anderen Bauteils erleichtert. Das erwärmte Bauelement schrumpft beim Abkühlen auf und kann mit der Restwärme für eine schnelle Aushärtung sorgen. Das erwärmte Bauteil, insbesondere der Gehäuseabschnitt, kann zum Ausbilden der Schrumpfklebe-Verbindung auf Temperaturen bis ungefähr 350°C, bevorzugt ungefähr 300°C, ganz besonders bevorzugt ungefähr 250°C, kurzfristig erwärmt werden. Das andere Bauteil, insbesondere der Einsatz, der in den Gehäuseabschnitt eingefügt wird, kann auf Raumtemperatur verbleiben.

Der Einsatz kann im Bereich der Aufschlagsfläche für den Schlagkolben angeordnet sein. Der Einsatz kann ferner die Aufschlagsfläche für den Schlagkolben des Rammbohrgeräts aufweisen. Der entsprechende Gehäuseabschnitt muss nach Einbringen des Einsatzes nicht mehr mechanisch bearbeitet werden. Der Einsatz kann auch starr oder beweglich mit der Bohrkopfspitze verbunden sein, wobei auch die Bohrkopfspitze die Aufschlagsfläche für den Schlagkolben aufweisen kann, die ihrerseits die mechanische Energie des Schlagkolbens auf den Einsatz und damit auf das Gehäuse überträgt.

Unter "Erdbohrvorrichtung" wird insbesondere jedes Gerät verstanden, welches einen Schlagkolben aufweist und welches in einem bestehenden oder zu erstellenden Kanal stoßweise bewegt wird, um eine Bohrung zu erstellen oder aufzuweiten oder ein bestehendes Rohr zerstörend oder nicht zerstörend zu ersetzen oder zu reinigen, Leitungen in bestehende Rohre oder andere Langkörper einzuziehen sowie sämtliche Vorrichtungen für Bauarbeiten des unterirdischen Vortriebs. Eine erfindungsgemäße Erdbohrvorrichtung kann insbesondere ein selbstgetriebenes Schlaggerät zur Erstellung einer Horizontalbohrung, ganz besonders bevorzugt eine Rammbohrvorrichtung sein.

Der Begriff "Rammbohrvorrichtung" umfasst sowohl Erdverdrängungsvorrichtungen, bei denen die Bohrkopfspitze fest mit dem Gehäuse verbunden ist als auch Rammbohrvorrichtungen mit axial, unabhängig vom Gehäuse verschiebbar gelagerter Bohrkopfspitze. Bei der Bohrkopfspitze kann es sich insbesondere um einen Meißel handeln. Eine erfindungsgemäße Rammbohrvorrichtung kann sowohl eine Ein-Takt-Vorrichtung als auch eine Zwei-Takt-Vorrichtung sein. Bei einer Zwei-Takt-Vorrichtung schlägt zunächst der Schlagkolben auf die Bohrkopfspitze, die im ersten Takt vorauseilt. Das Gehäuse wird im zweiten Takt vom Schlagkolben beaufschlagt. Spitzenwiderstand und Mantelreibung werden bei einer Zwei-Takt-Vorrichtung getrennt und abwechselnd leichter überwunden. Bei einer Zwei-Takt-Vorrichtung erfolgt eine bessere Energieumsetzung, die insbesondere die Zertrümmerung von Hindernissen infolge der Konzentration des Schlagimpulses auf die Bohrkopfspitze erleichtert. Infolge der entsprechend dem Hubweg des Bohrkopfes vorauseilenden Bodenverdrängung bleibt das Gehäuse in ruhiger Lage und gewährleistet dadurch eine relativ gute Laufstabilität.

Die Rammbohrvorrichtung im Sinne der Erfindung ist nicht auf unterirdische Erdarbeiten beschränkt. So können beispielsweise Leitungen, in denen ein Erdbohrgerät betrieben wird, auch oberirdisch verlaufen.

Der Begriff "Horizontalbohrung" im Sinne der vorliegenden Erfindung erfasst insbesondere jede Art von bestehenden oder zu erstellenden, vorzugsweise horizontalen Kanälen in einem Körper, insbesondere Erdkanäle einschließlich Erdbohrungen, Felsbohrungen oder Erdleitungen sowie unterirdische oder oberirdische Rohrleitungen und Abwasserkanäle, die sich durch Einsatz einer entsprechenden Rammbohrvorrichtung herstellen, aufweiten, zerstören, aufschneiden oder reinigen lassen.

Der Begriff "Einsatz" ist nicht auf eine bestimmte, insbesondere klassische Ringform beschränkt. Er kann also auch eine andere Form als die Kreisform aufweisen oder unterbrochen sein. Insbesondere kann der Einsatz eine äußere Konturform aufweisen, die im Wesentlichen der Innenkonturform des Abschnitts entspricht, in den der Einsatz eingesetzt ist. Es kann vorgesehen sein, dass die äußere Konturform des Einsatzes eine Einhüllende aufweist, die im Wesentlichen der Innenkonturform des Abschnitts entspricht, in dem der Einsatz eingesetzt ist. Insbesondere kann der Einsatz eine, vorzugsweise mittig angeordnete, Öffnung aufweisen.

Der Einsatz kann eine Außenkontur aufweisen, die eine größere Abmessung umfasst als eine entsprechende Abmessung der Innenkontur des Gehäuseabschnitts ohne im Gehäuseabschnitt angeordneten Einsatz. Der Einsatz kann in den Gehäuseabschnitt eingeführt werden, indem ein Temperaturunterschied zwischen Einsatz und Gehäuseabschnitt erzeugt wird, wodurch der Innendurchmesser temporär vergrößert und/oder die Außenkontur temporär verkleinert wird. Bevorzugt wird der Gehäuseabschnitt erwärmt.

Vorteilhafterweise weist der Abschnitt, in dem der Einsatz gehalten wird, einen kreisförmigen Durchmesser auf. Hierdurch kann die Herstellung vereinfacht werden, da der Einsatz zum Abschnitt rotationsinvariant eingesetzt werden kann. Es kann auf eine Vorzugslage beim Einbringen des Einsatzes verzichtet werden.

Der Einsatz kann insbesondere als Teil eines Bohrkopfgehäuses ausgebildet sein oder separat von diesem vorliegen. Der Einsatz kann endseitig am Bohrkopfgehäuse angeordnet sein. Insbesondere kann der Einsatz endseitig im Gehäuseabschnitt des Bohrkopfs bzw. der Bohrkopfspitze angeordnet sein. Der endseitig in dem Gehäuseabschnitt angeordnete Einsatz kann vor dem Gehäuseabschnitt für den Schlagkolben eingesetzt sein.

Die Erfindung schafft auch ein Verfahren zum Herstellen einer Erdbohrvorrichtung aufweisend einen Schlagkolben zum Bohren im Erdreich. In einem Gehäuseabschnitt zwischen Bohrkopf und dem Schlagkolben wird ein Einsatz so eingesetzt, dass er zumindest einen Teil der Energie des Schlagkolbens auf das Gehäuse überträgt. Zwischen dem Einsatz und dem Gehäuseabschnitt wird eine Schrumpfklebe-Verbindung hergestellt.

In einer bevorzugten Ausführungsform des Verfahrens wird als Klebstoff ein anaerober Klebstoff auf den Einsatz aufgetragen.

In einer bevorzugten Ausführungsform wird der Einsatz beim Einsetzen des Einsatzes in das Gehäuse im Wesentlichen auf Raumtemperatur gehalten.

Die Erfindung schafft auch ein Verwenden eines Fügeprozesses zum Fügen eines Einsatzes in einen Gehäuseabschnitt für einen Schlagkolben einer Erdbohrvorrichtung zum Bohren im Erdreich. Als Fügeprozess wird eine Schrumpfklebe-Verbindung verwendet.

Die Beschreibung der einzelnen Aspekte der Erfindung in Form der Erdbohrvorrichtung, des Verfahrens zum Herstellen der Erdbohrvorrichtung und des Verwendens eines Fügeprozesses sind als einander ergänzend zu verstehen. Ausführungen in der Beschreibung betreffend einen der Aspekte betreffen auch den anderen der Aspekte.

Die vorstehenden Ausführungen stellen ebenso wie die nachfolgende Beschreibung beispielhafter Ausführungsformen keinen Verzicht auf bestimmte Ausführungsformen oder Merkmale dar.

Die Erfindung wird nachfolgend anhand eines in den Zeichnungen dargestellten Ausführungsbeispiels näher erläutert. In den Zeichnungen zeigt:
- Fig. 1: einen vorderen Bereich einer erfindungsgemäßen Rammbohrvorrichtung in einer geschnittenen Seitenansicht in einer ersten Ausführungsform;
- Fig. 2: einen vorderen Bereich einer erfindungsgemäßen Rammbohrvorrichtung in einer geschnittenen Seitenansicht in einer zweiten Ausführungsform;
- Fig. 3: einen vorderen Bereich einer erfindungsgemäßen Rammbohrvorrichtung in einer geschnittenen Seitenansicht in einer dritten Ausführungsform; und
- Fig. 4: einen vorderen Bereich einer erfindungsgemäßen Rammbohrvorrichtung in einer geschnittenen Seitenansicht in einer vierten Ausführungsform.

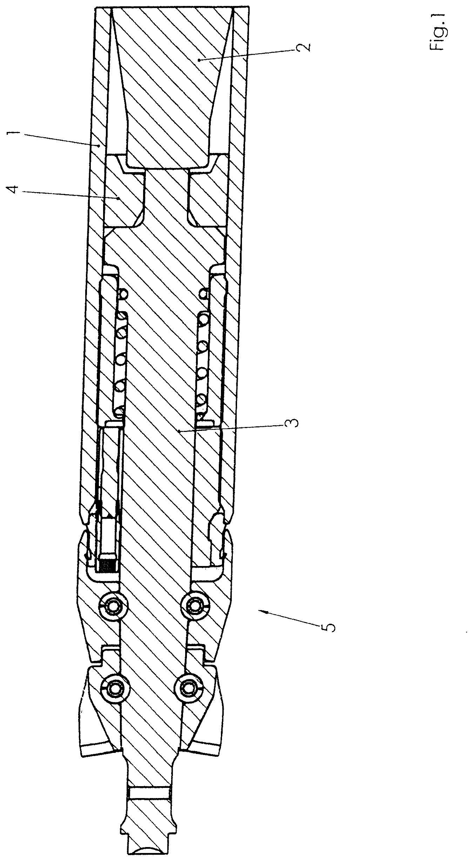

In Fig. 1 ist der vordere Bereich eines erfindungsgemäßen Rammbohrgeräts in einer geschnittenen Seitenansicht dargestellt. Die Fig. 1 zeigt eine erste Ausführungsform. In diesem Abschnitt weist das Rammbohrgerät ein Gehäuse 1 auf, in dem ein Schlagkolben 2 oszillierend beweglich gelagert ist. Der Schlagkolben 2 wird auf bekannte Art und Weise mittels Druckluft, die der Rammbohrvorrichtung an ihrem rückseitigen Ende (nicht dargestellt) über eine Druckluftleitung zugeführt wird, in die oszillierende Bewegung versetzt, wobei sie im Bohrbetrieb der Rammbohrvorrichtung in jedem Zyklus ihrer Bewegung auf eine vordere Schlagfläche auftrifft.

Die in Fig. 1 gezeigte Rammbohrvorrichtung ist eine nach dem 2-Takt-Prinzip arbeitende Rammbohrvorrichtung. Der Schlagkolben 2 trifft in zwei Stufen zunächst auf eine Bohrkopfspitze 3, die in Form eines Meißels ausgestaltet ist, und dann auf einen Einsatz 4 im Gehäuse 1. Die Bohrkopfspitze 3 ist im Bohrkopf 5 axial, unabhängig vom Gehäuse 1, verschiebbar gelagert. Ein Ende der Bohrkopfspitze 3 erstreckt sich durch einen verkleinerten Querschnitt im Inneren eines Abschnitts des Gehäuses 1, welcher durch den Einsatz 4 ausgebildet wird. Der Einsatz 4 umfasst die Aufschlagfläche für den Schlagkolben 2. Die Aufschlagfläche ist als Basisfläche eines sich konisch verjüngenden Hohlraums im Einsatz 4 ausgebildet.

Das Gehäuse 1 weist im Abschnitt mit dem Einsatz 4 eine kreisförmige Innenkontur mit einem Innendurchmesser auf. Der Einsatz 4 weist eine kreisförmige Außenkontur mit einem Außendurchmesser auf. Der Einsatz 4 ist im Außendurchmesser etwas größer als der Innendurchmesser des Gehäuses 1, sofern sich Einsatz 4 und Gehäuse 1 im Bereich des betrachteten Abschnitts auf gleicher Temperatur befinden. Um den Einsatz 4 in das Gehäuse 1 einzubringen, wird das Gehäuse 1 erwärmt und der Einsatz 4 im Wesentlichen auf Raumtemperatur gehalten und ein Kleber auf den Einsatz aufgebracht. Es erfolgt eine Schrumpfklebe-Verbindung. Der Einsatz 4 kann so auf die gewünschte Position im Gehäuse 1 gebracht werden. Nach Abkühlen des Gehäuses 1 und des Einsatzes 4 auf gleiche Temperatur ist der Einsatz 4 in der Position zum Gehäuse 1 fixiert.

Der Bohrkopf 5 kann dem in WO 2011/128045 A2 offenbarten Bohrkopf einer Rammbohrvorrichtung entsprechen. Diesbezüglich wird auf die WO 2011/128045 A2 vollumfänglich Bezug genommen.

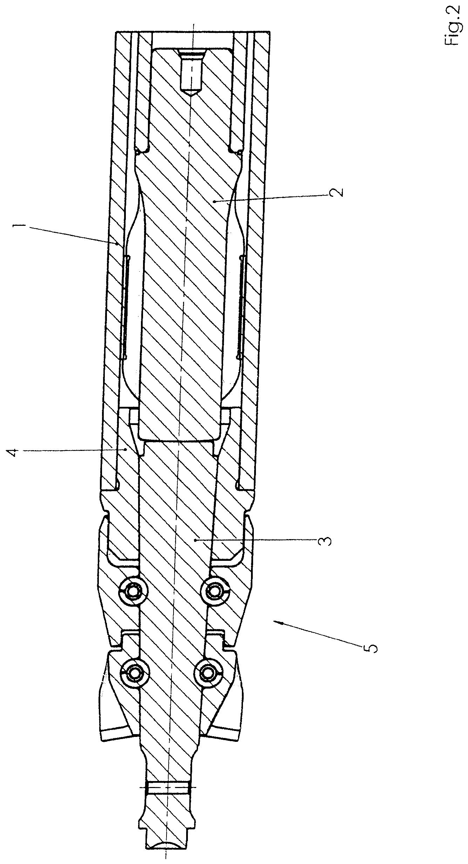

Die Fig. 2 zeigt eine alternative Ausführungsform mit einem endseitig in das Gehäuse 1 eingesetzten Bohrkopf 5, der einen Einsatz 4 aufweist, der in das Gehäuse 1 zur Verkleinerung des Querschnitts und Ausbildung einer Aufschlagfläche für den Schlagkolben 2 eingesetzt wurde. Der Einsatz 4 ist in den endseitigen Abschnitt des Gehäuses 1 eingeschrumpft und geklebt worden. Durch den Einsatz 4 erstreckt sich die Bohrkopfspitze 3 mit einem Ende. Die Bohrkopfspitze 3 wird endseitig geführt und weist eine Aufschlagfläche für den Schlagkolben 2 auf. Die in Fig. 2 dargestellte Ausführungsform arbeitet nach dem Ein-Takt-Prinzip.

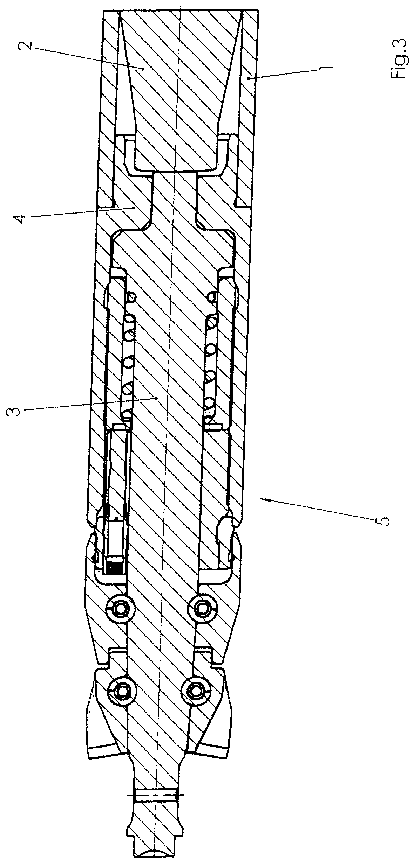

Die Fig. 3 zeigt eine alternative Ausführungsform, bei dem endseitig in das Gehäuse 1 ein Einsatz 4 eingesetzt wurde, der Teil eines Bohrkopfes 5 ist. Bei dem Einsatz 4 der Fig. 3 handelt es sich um den Endabschnitt eines eingeschrumpften und geklebten Vordergehäuses bzw. Bohrkopfes, das eine axial, unabhängig vom Gehäuse 1 verschiebbar gelagerte Bohrkopfspitze 3 aufweist. Die in Fig. 3 dargestellte Ausführungsform arbeitet nach dem Zwei-Takt-Prinzip. Der Einsatz 4 und die Bohrkopfspitze 3 weisen jeweils eine Aufschlagfläche für den Schlagkolben 2 auf, auf die der Schlagkolben 2 zeitlich nacheinander bei einer Bewegung nach vorne auftrifft. Hinsichtlich des Aufbaus des Bohrkopfes 5, der in Fig. 3 dargestellten Ausführungsform, wird auf die WO 2011/128045 A2 verwiesen, auf die diesbezüglich vollumfänglich Bezug genommen wird.

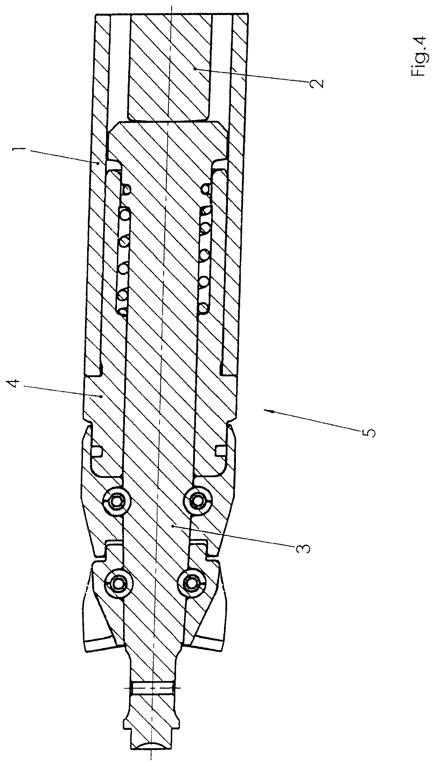

Die Fig. 4 zeigt eine alternative Ausführungsform, bei dem endseitig in das Gehäuse 1 ein Einsatz 4 eingesetzt wurde, der Teil eines Bohrkopfes 5 ist. Bei dem Einsatz 4 der Fig. 4 handelt es sich um den Endabschnitt eines eingeschrumpften vorderen Gehäuses oder Vordergehäuses bzw. Bohrkopfes 5, das eine axial, unabhängig vom Gehäuse 1 verschiebbar gelagerte Bohrkopfspitze 3 aufweist. Zwischen der Bohrkopfspitze 3 und dem Einsatz 4 ist eine Druckfeder angeordnet, die bei einer Beaufschlagung der Bohrkopfspitze 3 mittels des Schlagkolbens 2 zusammengedrückt wird. Die Bohrkopfspitze 3 weist eine Aufschlagfläche für den Schlagkolben 2 auf. Aufgrund der Beaufschlagung der Bohrkopfspitze 3 mittels des Schlagkolbens 2 kann die Bohrkopfspitze 3 auf den Einsatz 4 treffen, nachdem die zwischen der Bohrkopfspitze 3 und dem Einsatz 4 angeordnete Druckfeder zumindest teilweise zusammengedrückt wurde. Die in Fig. 4 dargestellte Ausführungsform arbeitet nach dem Zwei-Takt-Prinzip. Zunächst trifft der Schlagkolben 2 auf die Bohrkopfspitze 3 auf. Durch den von dem Schlagkolben 2 übertragenen Impuls trifft die Bohrkopfspitze 3 auf den Einsatz 4 auf nach ausreichender Kompression der Druckfeder.

## Patentansprüche

1. Erdbohrvorrichtung mit einem Schlagkolben (2) zum Bohren im Erdreich, die mindestens einen Gehäuseabschnitt für den Schlagkolben (2) aufweist, wobei zwischen Bohrkopfspitze (3) und dem Schlagkolben (2) ein Einsatz (4) im Gehäuse (1) so angeordnet ist, dass dieser zumindest einen Teil der Energie des Schlagkolbens (2) auf das Gehäuse (1) überträgt, **dadurch gekennzeichnet, dass** der Einsatz (4) mittels einer Schrumpfklebe-Verbindung im Gehäuse (1) gehalten ist.

2. Erdbohrvorrichtung nach Anspruch 1, wobei der Abschnitt, in dem der Einsatz (4) angeordnet ist, einen kreisförmigen Durchmesser aufweist.

3. Erdbohrvorrichtung nach Anspruch 1 oder 2, wobei der Klebstoff ein anaerober Klebstoff ist.

4. Erdbohrvorrichtung nach einem der Ansprüche 1 bis 3, wobei der Einsatz (4) Teil eines vorderen Bohrkopfgehäuses ist.

5. Verfahren zum Herstellen einer Erdbohrvorrichtung aufweisend einen Schlagkolben (2) zum Bohren im Erdreich, wobei in einem Gehäuseabschnitt zwischen Bohrkopf (5) und dem Schlagkolben (2) ein Einsatz (4) so eingesetzt wird, dass er zumindest einen Teil der Energie des Schlagkolbens (2) auf das Gehäuse (1) überträgt, **dadurch gekennzeichnet, dass** zwischen Einsatz (4) und dem Abschnitt eine Schrumpfklebe-Verbindung hergestellt wird.

6. Verfahren nach Anspruch 5, **dadurch gekennzeichnet, dass** als Klebstoff ein anaerober Klebstoff auf den Einsatz (4) aufgetragen wird.

7. Verfahren nach Anspruch 5 oder 6, **dadurch gekennzeichnet, dass** der Einsatz (4) beim Einsetzen des Einsatzes in das Gehäuse (1) im Wesentlichen auf Raumtemperatur gehalten wird.

8. Verwenden eines Fügeprozesses zum Fügen eines Einsatzes (4) in einen Gehäuseabschnitt für einen Schlagkolben (2) einer Erdbohrvorrichtung zum Bohren im Erdreich, wobei der Einsatz (4) im Gehäuse (1) so zwischen Bohrkopfspitze (3) und dem Schlagkolben (2) angeordnet ist, dass der Einsatz (4) zumindest einen Teil der Energie des Schlagkolbens (2) auf das Gehäuse (1) überträgt, **dadurch gekennzeichnet, dass** als Fügeprozess eine Schrumpfklebe-Verbindung verwendet wird.

## Claims

1. Earth drilling device having a percussion piston (2) for drilling in the ground which has at least one housing portion for the percussion piston (2), wherein an insert (4) is arranged in the housing (1) between the drill head tip (3) and the percussion piston (2) in such a manner that said insert transmits at least part of the energy of the percussion piston (2) to said housing (1), **characterized in that** the insert (4) is held in the housing (1) by means of a shrink-fit adhesive connection.

2. Earth drilling device according to Claim 1, wherein the portion in which the insert (4) is arranged has a circular diameter.

3. Earth drilling device according to Claim 1 or 2, wherein the adhesive is an anaerobic adhesive.

4. Earth drilling device according to one of Claims 1 to 3, wherein the insert (4) is part of a front drill head housing.

5. Method for producing an earth drilling device having a percussion piston (2) for drilling in the ground, wherein an insert (4) is inserted in a housing portion between the drill head (5) and the percussion piston (2) in such a manner that it transmits at least part of the energy of the percussion piston (2) to the housing (1), **characterized in that** a shrink-fit adhesive connection is made between the insert (4) and the portion.

6. Method according to Claim 5, **characterized in that** an anaerobic adhesive is applied to the insert (4) as the adhesive.

7. Method according to Claim 5 or 6, **characterized in that** the insert (4) is kept substantially at room temperature when the insert is inserted into the housing (1).

8. Use of a joining process for joining an insert (4) into a housing portion for a percussion piston (2) of an earth drilling device for drilling in the ground, wherein the insert (4) is arranged in the housing (1) between the drill head tip (3) and the percussion piston (2) in such a manner that said insert (4) transmits at least part of the energy of the percussion piston (2) to the housing (1), **characterized in that** a shrink-fit adhesive connection is used as a joining process.

## Revendications

1. Dispositif de forage du sol avec un piston à percussion (2) destiné au forage du sol, présentant au moins une partie de boîtier pour le piston à percussion (2), où un insert (4) dans le boîtier (1) entre une pointe de la tête de forage (3) et le piston à percussion (2) est disposé de manière à transmettre au moins une partie de l'énergie du piston à percussion (2) au boîtier (1), **caractérisé en ce que** l'insert (4) est maintenu dans le boîtier (1) au moyen d'un joint adhésif rétractable.

2. Dispositif de forage du sol selon la revendication 1, où la partie dans laquelle l'insert (4) est disposé, présente un diamètre circulaire.

3. Dispositif de forage du sol selon la revendication 1 ou 2, où l'adhésif est un adhésif anaérobique.

4. Dispositif de forage du sol selon l'une quelconque des revendications 1 à 3, où l'insert (4) fait partie d'un boîtier de la tête de forage avant.

5. Procédé de fabrication d'un dispositif de forage du sol présentant un piston à percussion (2) destiné au forage du sol, où un insert (4) dans une partie de boîtier entre une tête de forage (5) et le piston à percussion (2) est introduit de manière à transmettre au moins une partie de l'énergie du piston à percussion (2) au boîtier (1), **caractérisé en ce qu'**un joint adhésif rétractable est établi entre l'insert (4) et la partie de boîtier.

6. Procédé selon la revendication 5, **caractérisé en ce qu'**un adhésif anaérobique est appliqué en tant qu'adhésif sur l'insert (4).

7. Procédé selon la revendication 5 ou 6, **caractérisé en ce que** l'insert (4) lors de son introduction dans le boîtier (1) est maintenu essentiellement à la température ambiante.

8. Utilisation d'un processus d'assemblage pour intégrer un insert (4) dans une partie de boîtier pour un piston à percussion (2) d'un dispositif de forage du sol destiné au forage du sol, où l'insert (4) dans le boîtier (1) entre une pointe de tête de forage (3) et le piston à percussion (2) est disposé de manière à ce que l'insert (4) transmette au moins une partie de l'énergie du piston à percussion (2) au boîtier (1) **caractérisé en ce qu'**un joint adhésif rétractable est utilisé comme processus d'assemblage.
